# EUROPEAN PATENT APPLICATION

(11) **EP 1 380 620 A1**
(43) Date of publication of application: **14.01.2004**
(21) Application number: 02711231.7
(22) Date of filing: 30.01.2002
(51) Int. Cl.: C08L 101/00, C08L 51/06, C08F 265/06

(54) **IMPACT MODIFIER FOR THERMOPLASTIC RESIN AND RESIN COMPOSITION CONTAINING THE SAME**

(30) Priority: 09.02.2001 JP 2001033952
(71) Applicant: KANEKA CORPORATION, Osaka-shi, Osaka 530-8288 (JP)
(72) Inventor: MIYATAKE, Nobuo, c/o KANEKA CORP., Takasago Plant, Takasago-shi, Hyogo 676-0027 (JP); TAKAKI, Akira, c/o KANEKA CORP, Takasago Plant, Takasago-shi, Hyogo 676-0027 (JP)
(74) Representative: VOSSIUS & PARTNER
(86) International application number: PCT/JP2002/000682
(87) International publication number: WO 2002/064678

(57) **Abstract**

An impact modifier comprising a rubber-modified resin having a toluene-insoluble matter content of at least 70 % by weight obtained by conducting polymerization of a vinyl monomer in the presence of acrylic rubber particles, during which polymer particles are agglomerated to enhance the particle size. The impact modifier provides thermoplastic resin compositions having an excellent impact resistance by the incorporation thereof into various thermoplastic resins.

## Description

### TECHNICAL FIELD

The present invention relates to an impact modifier for thermoplastic resins and a thermoplastic resin composition containing the same. More particularly, the present invention relates to an acrylic rubber-modified resin having an impact resistance-imparting effect remarkably improved without extra cost, and a thermoplastic resin composition having an excellent impact resistance which contains the rubber-modified resin:

### BACKGROUND ART

MBS resins wherein methyl methacrylate and styrene are graft-polymerized onto butadiene rubber have been popularly used to improve the impact resistance of thermoplastic resins. However, MBS resins have the defect that the weatherability is poor since butadiene rubber is used therein. For the reason, it is proposed to use acrylic rubbers, particularly butyl acrylate rubber, as a rubber component of graft copolymers (JP-A-51-28117), and they are practically used. However, butyl acrylate rubber has the defect that though the weatherability is satisfactory, the impact resistance-imparting effect is not high.

Thus, for enhancing the impact resistance-imparting effect of graft copolymers containing butyl acrylate rubber, some proposals of using butyl acrylate rubber in combination with a rubber component having a lower glass transition temperature (Tg) has been made. For example, JP-A-4-100812 proposes using a composite rubber of butyl acrylate rubber and a silicone rubber having a lower Tg in graft polymerization. JP-A-8-100095 and JP-A-2000-26552 propose improving the impact resistance-imparting effect by using butyl acrylate in combination with an acrylic monomer having a long chain alkyl group in the side chain which provides a polymer having a lower Tg, to form a rubber component of a graft copolymer. However, though the impact resistance-imparting effect is improved, no improvement commensurate with increase in cost resulting from the use of additional raw material is obtained.

It has also been attempted to improve the impact resistance-imparting effect by devising methods of production without combination use with rubber components having a low Tg. For example, it is known that the impact resistance-imparting effect is improved by agglomerating rubber particles in a latex to enhance the particle size and then graft-polymerizing a vinyl monomer onto the rubber of enhanced particle size. JP-A-5-25227 proposes to improve the impact resistance-imparting effect by graft-polymerizing a small amount of a vinyl monomer onto rubber particles and, thereafter, agglomerating the resulting polymer particles to enhance the particle size and further conducting graft polymerization of the vinyl monomer. However, working examples of this publication show that the graft copolymers prepared in such a manner is inferior in impact strength as compared with graft copolymers prepared by firstly agglomerating rubber particles to enhance the particle size and then graft-polymerizing a vinyl monomer. Therefore, though raw material cost does not increase, no improvement of the impact resistance-imparting effect is found.

An object of the present invention is to provide an impact modifier having an excellent effect of improving the impact resistance of thermoplastic resins and an excellent weatherability.

A further object of the present invention is to provide an impact modifier for thermoplastic resins which is excellent in balance of cost and impact resistance-imparting effect.

A still further object of the present invention is to provide an acrylic rubber-modified resin having a remarkably improved impact resistance-imparting effect which can be simply and easily prepared and is useful as an impact modifier for thermoplastic resins.

Another object of the present invention is to provide a thermoplastic resin composition having an excellent impact resistance.

### DISCLOSURE OF INVENTION

The present inventors have found that a rubber-modified resin which is prepared by polymerizing a vinyl monomer in the presence of acrylic rubber particles and, during the polymerization, agglomerating polymer particles present in the latex to enhance the particle size, can exhibit a very excellent impact resistance-imparting effect when the rubber-modified resin has a specific content of toluene-insoluble matter.

Thus, the present invention provides an impact modifier for thermoplastic resins comprising a rubber-modified resin which is obtained by polymerizing a vinyl monomer in the presence of acrylic rubber particles and, during the polymerization, agglomerating polymer particles to enhance the particle size and which has a toluene-insoluble matter content of at least 70 % by weight.

Preferably, 5 to 30 parts by weight of the vinyl monomer is polymerized in the presence of 70 to 95 parts by weight the acrylic rubber particles in the form of a latex (the total being 100 parts by weight).

The acrylic rubber-modified resin of the present invention is useful as an impact modifier and is applicable to various thermoplastic resins, e.g., polyvinyl chloride, chlorinated polyvinyl chloride, polystyrene, styrene-acrylonitrile copolymer, styrene-acrylonitrile-N-phenylmaleimide copolymer, α-methylstyrene-acrylonitrile copolymer, polymethyl methacrylate, methyl methacrylate-styrene copolymer, polycarbonate, polyamide, polyester, HIPS resin, ABS resin, AAS resin, AES resin and polyphenylene ether.

Thus, the present invention also provides a thermoplastic resin composition comprising 100 parts by weight of a thermoplastic resin and 0.1 to 150 parts by weight of the above-mentioned rubber-modified resin.

### BEST MODE FOR CARRYING OUT THE INVENTION

The impact modifier of the present invention for thermoplastic resins comprises a rubber-modified resin prepared by polymerizing a vinyl monomer in the presence of an acrylic rubber and, during the polymerization, agglomerating the resulting polymer particles to enhance the particle size. That is to say, the rubber-modified resin used as impact modifier contains particles formed by particle size-enhancing agglomeration, which is conducted in the course of the graft polymerization, of graft copolymer particles wherein the vinyl monomer is graft-polymerized onto the acrylic rubber. The particle size enhancement may be conducted at a stroke in the course of the graft polymerization or may be conducted gradually with the progress of the graft polymerization.

Also, the impact modifier of the present invention for thermoplastic resins, namely the rubber-modified resin, contains at least 70 % by weight, preferably at least 80 % by weight, more preferably at least 85 % by weight, of a toluene-insoluble matter. The maximum toluene-insoluble matter content is 100 % by weight. If the toluene-insoluble matter content is too small, the impact resistance-imparting effect tends to become low. The toluene-insoluble matter content (gel fraction) denotes the weight percentage (%) of toluene-insoluble matter measured by immersing a sample in toluene at room temperature for 24 hours and centrifuging at 12,000 r.p.m. for 1 hour.

The impact modifier of the present invention has the advantage of being superior in impact resistance-imparting effect as compared with a graft copolymer prepared in the same manner as the present invention but without conducting the particle size enhancing agglomeration during the polymerization of vinyl monomer, and a graft copolymer prepared in such a manner as agglomerating acrylic rubber particles prior to the polymerization of vinyl monomer, namely a graft copolymer prepared by graft-polymerizing a vinyl monomer onto acrylic rubber particles of enhanced particle size.

The term "acrylic rubber" as used herein means a polymer containing 50 to 100 % by weight, especially 60 to 100 % by weight, of units of a (meth)acrylic monomer and having a glass transition temperature (Tg) of not more than 0°C.

In the present invention, any acrylic rubbers can be used without particular restriction so long as they have properties as a rubber. Examples thereof are, for instance, poly(butyl acrylate) rubber, poly(2-ethylhexyl acrylate) rubber, butyl acrylate-2-ethyl hexyl acrylate copolymer rubber, and the like. The acrylic rubbers may be used alone or in admixture thereof. In case of using combination of two or more rubbers, these rubbers may be a mere mixture of respective particles of these rubbers, or may be physically associated with each other such as entanglement or chemically bound to each other, or may be used in the form of particles having a core-shell structure.

In the present invention, preferably the acrylic rubber is used in the form of a latex. From the viewpoint of easiness in particle size enhancement operation mentioned after, it is preferable that the acrylic rubber particles in the latex have an average particle size of 10 to 200 nm, especially 20 to 150 nm. The average particle size of the rubber particles is measured by a light scattering method as a volume average particle size.

From the viewpoint of exhibiting impact strength, it is preferable that the content of toluene-insoluble matter (gel fraction) in the acrylic rubber particles is not less than 70 % by weight, especially not less than 80 % by weight. The maximum gel fraction is 100 % by weight. The toluene-insoluble matter content of the obtained graft copolymer (rubber-modified resin) can be adjusted by selecting the toluene-insoluble matter content of the acrylic rubber particles.

Examples of the acrylic rubber are, for instance, polybutyl acrylate rubber, butyl acrylate-2-ethylhexyl (meth)acrylate copolymer rubber, a rubber wherein polybutyl acrylate and poly2-ethylhexyl (meth)acrylate physically coexist, a rubber wherein polybutyl acrylate and poly2-ethylhexyl (meth)acrylate are chemically bound, butyl acrylate-butadiene copolymer rubber, butyl acrylate-styrene copolymer rubber, and the like. The acrylic rubbers may be used alone or in admixture thereof. The term "copolymer" as used herein comprehends random copolymers, block copolymers, graft copolymers and combinations thereof.

Acrylic rubber particles in the form of a latex, namely an acrylic rubber latex, are preferably used from the viewpoint of easiness in the production of rubber-modified resin.

The acrylic rubber latex used in the present invention usually has a solid concentration of 10 to 50 % by weight (measured after drying at 120°C for 1 hour). Acrylic rubber latex having a solid concentration of 20 to 40 % by weight is preferred from the viewpoint of easiness in controlling the particle size by the particle size enhancement operation mentioned after.

The acrylic rubber latex can be obtained by polymerizing a monomer mixture, e.g., a monomer mixture of an alkyl (meth)acrylate monomer, a polyfunctional monomer containing at least two polymerizable unsaturated bonds in its molecule and other copolymerizable monomers in the presence of a radical polymerization initiator and optionally a chain transfer agent in accordance with a conventional emulsion polymerization method, for example, by methods as described in JP-A-50-88169 and JP-A-61-141746.

The alkyl (meth)acrylate monomer is a component which constitutes the main backbone of the acrylic rubber. Examples thereof are, for instance, an alkyl acrylate having a C₁ to C₁₂ alkyl group such as methyl acrylate, ethyl acrylate, propyl acrylate, butyl acrylate or 2-ethylhexyl acrylate, an alkyl methacrylate having a C₄ to C₁₂ alkyl group such as 2-ethylhexyl methacrylate or lauryl methacrylate, and the like. These may be used alone or in admixture thereof. Of these, an alkyl (meth)acrylate monomer mixture containing 40 to 100 % by weight, especially 60 to 100 % by weight, of butyl acrylate is preferred from the viewpoints of low glass transition temperature of the obtained polymers and economy, in which the residual comonomer is for instance methyl acrylate, ethyl acrylate, 2-ethylhexyl acrylate or the like.

The polyfunctional monomer containing at least two polymerizable unsaturated bonds in its molecule is a component used for introducing a crosslinked structure to the acrylic rubber particles to form a network structure, thereby exhibiting a rubber elasticity, and for providing an active site for grafting of vinyl monomers mentioned after. Examples of the polyfuntional monomer are, for instance, dially phthalate, triallyl cyanurate, trially isocyanurate, allyl methacrylate, ethylene glycol dimethacrylate, 1,3-butylene glycol dimethacrylate, divinyl benzene, and other compounds known as a crosslinking agent or a graftlinking agent such as other allyl, di(meth)acrylate and divinyl compounds. These may be used alone or in admixture thereof. Of these, allyl methacrylate, triallyl cyanurate, trially isocyanurate and diallyl phthalate are preferred from the viewpoints of crosslinking efficiency and grafting efficiency.

The other copolymerizable monomer may be optionally used for the purpose of adjusting the refractive index or the like of the obtained acrylic rubbers. Examples thereof are, for instance, methacrylic acid, methacrylic esters other than alkyl methacrylates having a C₄ to C₁₂ alkyl group, such as methyl methacrylate, ethyl methacrylate, glycidyl methacrylate, hydroxyethyl methacrylate and benzyl methacrylate, aromatic vinyl compounds such as styrene, α-methylstyrene, o-methylstyrene, m-methylstyrene, p-methylstyrene and chlorostyrene, vinyl cyanide compounds such as acrylonitrile and methacrylonitrile, silicon-containing vinyl compounds such as γ-methacryloyloxypropyldimethoxymethylsilane, γ-methacryloyloxypropyltrimethoxysilane and trimethylvinylsilane, and the like. These may be used alone or in admixture thereof.

Preferable proportions of the monomers used in the production of acrylic rubber latex are from 66.5 to 99.8 % by weight, especially 85 to 99.8 % by weight, of the alkyl (meth)acrylate monomer, 0.2 to 10 % by weight, especially 0.2 to 5 % by weight of the polyfunctional monomer containing two or more polymerizable unsaturated bonds in its molecule, and 0 to 23.4 % by weight, especially 0 to 14.9 % by weight, of the other copolymerizable monomer, the total thereof being 100 % by weight. If the proportion of the alkyl (meth)acrylate monomer is too small, the products lack properties as a rubber, so the impact resistance-imparting effect is lowered. If the proportion of the alkyl (meth)acrylate is too large, the proportion of the polyfunctional monomer becomes too small. If the proportion of the polyfunctional monomer is too small, the crosslinking density of the rubber is low, so the toluene-insoluble matter content of the finally obtained rubber-modified resin becomes less than 70 % by weight and the impact resistance-imparting effect is lowered. If the proportion of the polyfunctional monomer is too large, there is a tendency that the cost increases and it is economically disadvantageous. The other copolymerizable monomer is a component used for adjusting the refractive index or the impact resistance and, when it is desired to obtain the effects to be produced by the use thereof, the amount thereof is preferably not less than 0.1 % by weight.

As the radical polymerization initiator used in the emulsion polymerization for the preparation of the acrylic rubber latex and the chain transfer agent optionally used therein, those used in conventional radical polymerization can be used without particular restriction.

Examples of the radical polymerization initiator are an organic peroxide such as cumene hydroperoxide, tert-butyl hydroperoxide, benzoyl peroxide, tert-butylperoxy isopropylcarbonate, di-tert-butyl peroxide, tert-butylperoxy laurate, lauroyl peroxide, succinic acid peroxide, cyclohexanone peroxide or acetylacetone peroxide; an inorganic peroxide such as potassium persulfate or ammonium persulfate; an azo compound such as 2,2'-azobisisobutylonitrile or 2,2'-azobis-2,4-dimethylvaleronitrile; and the like. Of these, organic peroxides and inorganic peroxides are preferably used from the viewpoint of a high reactivity.

In case of using organic peroxides or inorganic peroxides, they may be used in combination with a reducing agent, e.g., a mixture of ferrous sulfate/glucose/sodium pyrophosphate, a mixture of ferrous sulfate/dextrose/sodium pyrophosphate, or a mixture of ferrous sulfate/sodium formaldehyde sulfoxylate/ethylenediamineacetate. The use of a reducing agent is particularly preferable, since the polymerization temperature can be lowered.

The radical polymerization initiator is used usually in an amount of 0.005 to 10 parts by weight, preferably 0.01 to 5 parts by weight, more preferably 0.02 to 2 parts by weight, per 100 parts by weight of a monomer mixture used. If the amount of the initiator is too small, the rate of polymerization is low, so the production efficiency tends to be lowered, and if the amount is too large, the molecular weight of the obtained polymers is lowered, so the impact resistance tends to be' lowered.

Examples of the chain transfer agent are, for instance, t-dodecylmercaptan, n-octylmercaptane, n-tetradecylmercaptan, n-hexylmercaptan and the like.

The chain transfer agent is an optional component. From the viewpoint of exhibiting the impact resistance-imparting effect, it is preferable that the amount thereof is from 0.001 to 5 parts by weight per 100 parts by weight of the monomer mixture.

Examples of the emulsifier used in the emulsion polymerization for the production of acrylic rubbers are alkylbenzene sulfonic acid, sodium alkylbenzene sulfonate, alkyl sulfonic acid, sodium alkyl sulfonate, sodium (di)alkyl sulfosuccinic acid, sodium polyoxyethylene nonylphenyl ether sulfonate, sodium alkyl sulfate, potassium oleate, sodium oleate, potassium rhodinate, sodium rhodinate, potassium palmitate, sodium palmitate, potassium stearate, and the like. These may be used alone or in admixture thereof.

The rubber-modified resin of the present invention can be obtained by polymerizing a vinyl monomer in the presence of the acrylic rubber latex and, during the polymerization, agglomerating the particles in the latex to enhance the particle size.

The rubber-modified resin comprises resin particles containing particles formed by particle size-enhancing agglomeration of graft copolymer particles wherein a vinyl monomer is graft-polymerized onto acrylic rubber particles. It is preferable that the average particle size of the resin particles is not less than 100 nm, especially not less than 120 nm, and is not more than 1,000 nm, especially not more than 800 nm. If the average particle size is less than 100 nm or more than 1,000 nm, the impact resistance tends to lower.

The particle size-enhancing agglomeration can be carried out by a conventional method using an electrolyte, for example, by adding, prior to the step of polymerizing a vinyl monomer in the presence of an acrylic rubber latex or during this step, an electrolyte, e.g., an inorganic salt such as sodium sulfate, an inorganic acid such as hydrochloric acid, an organic acid such as acetic acid, or a latex of a non-crosslinked acid group-containing copolymer obtained by copolymerization of an unsaturated acid monomer and an alkyl (meth)acrylate monomer as disclosed in JP-A-50-25655, JP-A-8-12703 and JP-A-8-12704, to the polymerization system. In particular, the use of inorganic salt is preferred since an operation for adjusting the pH of the system after the completion of the agglomeration is omitted.

An example of the acid group-containing copolymer is, for instance, copolymers of 5 to 25 % by weight, especially 5 to 15 % by weight, of at least one unsaturated acid such as acrylic acid, methacrylic acid, itaconic acid or crotonic acid, 45 to 95 % by weight, especially 65 to 95 % by weight, of at least one alkyl (meth)acrylate having a C₁ to C₁₂ alkyl group (preferably a mixture of 10 to 80 % by weight of an alkyl acrylate having a C, to C₁₂ alkyl group and 20 to 90 % by weight of an alkyl methacrylate having a C₁ to C₁₂ alkyl group), and 0 to 30 % by weight, especially 0 to 20 % by weight, of at least one other vinyl monomer copolymerizable therewith.

In case of using an inorganic salt, an inorganic acid or an organic acid as an electrolyte, preferably the amount thereof is from 0.1 to 5 parts by weight, especially 0.2 to 4 parts by weight, more especially 0.3 to 3 parts by weight, per 100 parts by weight (solid basis) of the acrylic rubber latex. If the amount is too small, the agglomeration tends to be difficult. If the amount is too large, there is a tendency that it is difficult to apply to industrial production since clots are easy to be produced.

In case of using an acid group-containing copolymer latex as an electrolyte, preferably the amount thereof is from 0.1 to 10 parts by weight, especially 0.2 to 5 parts by weight, per 100 parts by weight (solid basis) of the rubber latex. If the amount is too small, the agglomeration tends to occur with difficulty. If the amount is too large, unfavorable phenomenon such as lowering of impact resistance is easy to occur.

The time of adding an electrolyte such as inorganic salt, inorganic acid, organic acid or acid group-containing copolymer latex to the polymerization system to enhance the particle size is not particularly limited so long as the agglomeration of particles takes place to enhance the particle size during the step of polymerizing a vinyl monomer in the presence of rubber particles. From the viewpoint of impact resistance, it is preferable to add the electrolyte to the polymerization system prior to starting the polymerization or until 90 % by weight of a vinyl monomer used for the polymerization is polymerized (that is, when the polymerization conversion is from 0 to 90 % by weight), especially during the period after not less than 10 % by weight of the vinyl monomer used for the polymerization is polymerized and until 70 % by weight of the vinyl monomer used for the polymerization is polymerized (polymerization conversion 10 to 70 % by weight), more especially during the period after not less than 10 % by weight of the vinyl monomer used for the polymerization is polymerized and until 50 % by weight of the vinyl monomer used for the polymerization is polymerized (polymerization conversion 10 to 50 % by weight). After adding the electrolyte, the polymerization is further continued to complete the polymerization. Preferably, the polymerization is carried out until the polymerization conversion of the vinyl monomer reaches at least 95 % by weight.

The polymerization temperature is from 30 to 90°C, preferably from 40 to 80°C.

The vinyl monomer to be polymerized in the presence of acrylic rubber particles is a component for raising the compatibility of the obtained rubber-modified resin with a thermoplastic resin to thereby uniformly disperse the rubber-modified resin into the thermoplastic resin when the thermoplastic resin is incorporated with the rubber-modified resin and molded.

Examples of the vinyl monomer are, for instance, an aromatic vinyl monomer such as styrene, α-methylstyrene, p-methylstyrene, other styrene derivatives or divinyl benzene, a vinyl cyanide monomer such as acrylonitrile or methacrylonitrile, a halogenated vinyl monomer such as vinyl chloride, vinylidene chloride or vinylidene fluoride, methacrylic acid, a methacrylic ester monomer such as methyl methacrylate, ethyl methacrylate, propyl methacrylate, butyl methacrylate, glycidyl methacrylate, hydroxyethyl methacrylate, ethylene glycol dimethacrylate or 1,3-butylene glycol dimethacrylate, acrylic acid, an acrylic ester monomer such as methyl acrylate, ethyl acrylate, propyl acrylate, butyl acrylate, glycidyl acrylate or hydroxybutyl acrylate, and the like. The vinyl monomers may be used alone or in admixture thereof. Also, one or more vinyl monomers may be polymerized in multistages. From the viewpoint of easiness in particle size enhancement by agglomeration is preferred a monomer mixture containing 50 to 100 % by weight, especially 70 to 100 % by weight, of a methacrylic ester monomer and/or an acrylic ester monomer, the residual comonomer of which may be the above-mentioned aromatic vinyl monomer, vinyl cyanide monomer, halogenated vinyl monomer and the like.

Preferably, the vinyl monomer is used in an amount of 5 to 30 parts by weight, especially 8 to 20 parts by weight, more especially 10 to 15 parts by weight, while the amount of the acrylic rubber particles is from 70 to 95 parts by weight, especially 80 to 92 parts by weight, more especially 85 to 90 parts by weight, wherein the total thereof is 100 parts by weight. If the amount of the vinyl monomer is too large, there is a tendency that the toluene-insoluble matter content of the obtained rubber-modified resin becomes less than 70 % by weight and the impact resistance is not sufficiently exhibited. If the amount of the vinyl monomer is too small, the handling tends to become difficult since the powdery state of the rubber-modified resin is deteriorated.

The polymerization of the vinyl monomer is carried out in the presence of an acrylic rubber latex preferably by a emulsion polymerization. As a radical polymerization initiator used therein and as a chain transfer agent and an emulsifier which are optionally used therein, there may be used those usable in the production of the acrylic rubber latex. The limitations concerning the amounts of them in the production of the acrylic rubber latex are also applicable to this case. Among the radical polymerization initiators mentioned above, succinic acid peroxide, cyclohexanone peroxide, acetylacetone peroxide, potassium persulfate and ammonium persulfate are preferred, since a polymer component of the vinyl monomer is hard to enter inside of acrylic rubber particles, so graft copolymer particles favorable for impact resistance can be obtained.

The rubber-modified resin obtained by the emulsion polymerization of the vinyl monomer may be isolated from the obtained latex or may be used in the form of the latex as it is. The isolation of the polymer may be carried out in a usual manner, for example, by adding a metal salt such as calcium chloride, magnesium chloride or magnesium sulfate, or an inorganic or organic acid such as hydrochloric acid, sulfuric acid, phosphoric acid or acetic acid, to the latex to coagulate the latex, separating, washing with water, dehydrating and drying the polymer. A spray-drying method is also applicable.

The thus obtained rubber-modified resin (in the state of powder or latex) is incorporated as an impact modifier into various thermoplastic resins to give thermoplastic resin compositions having an improved impact resistance.

Examples of the thermoplastic resin are, for instance, polyvinyl chloride, chlorinated polyvinyl chloride, polystyrene, styrene-acrylonitrile copolymer, styrene-acrylonitrile-N-phenylmaleimide copolymer, α-methylstyrene-acrylonitrile copolymer, polymethyl methacrylate, methyl methacrylate-styrene copolymer, polycarbonate, polyamide, a polyester such as polyethylene terephthalate, polybutylene terephthalate or 1,4-cyclohexanedimethanol-modified polyethylene terephthalate, butadiene rubber-styrene copolymer (HIPS resin), acrylonitrile-butadiene rubber-styrene copolymer (ABS resin), acrylonitrile-acrylic rubber-styrene copolymer (AAS resin), acrylonitrile-ethylenepropylene rubber-styrene copolymer (AES resin), polyphenylene ether, and the like. These may be used alone or in admixture thereof. Examples of a combination of at least two resins are a mixed resin of 5 to 95 % by weight of polycarbonate and 5 to 95 % by weight of HIPS resin, ABS resin, AAS resin or AES resin (total thereof 100 % by weight), and a mixed resin of 5 to 95 % by weight of polycarbonate and 5 to 95 % by weight of polyethylene terephthalate or polybutylene terephthalate (total thereof 100 % by weight).

The amount of the rubber-modified resin is from 0.1 to 150 parts by weight and is preferably, from the viewpoint of a balance of physical properties, from 0.5 to 120 parts by weight, per 100 parts by weight of a thermoplastic resin. If the amount is too small, the impact resistance of thermoplastic resins is not sufficiently improved, and if the amount is too large, it is difficult to maintain the properties such as rigidity and surface hardness of the thermoplastic resins.

Mixing of a thermoplastic resin with a powder of the rubber-modified resin can be carried out by firstly mixing them through a Henschel mixer, a ribbon mixer or the like and then melt-kneading the mixture through a roll mill, an extruder, a kneader or the like.

The thermoplastic resin compositions of the present invention may contain usual additives, e.g., plasticizer, stabilizer, lubricant, ultraviolet absorber, antioxidant, flame retardant, pigment, glass fiber, filler, polymer processing aid, polymer lubricant and antidropping agent. For example, preferable examples of the flame retardant are a phosphorus compound such as triphenyl phosphate, condensed phosphate or stabilized red phosphorus, a silicone compound such as phenyl group-containing polyorganosiloxane copolymer, and the like. Preferable examples of the polymer processing aid are methacrylate (co)polymers such as methyl methacrylate-butyl acrylate copolymer. Preferable examples of the antidropping agent are fluorocarbon resins such as polytetrafluoroethylene. Preferable amounts of these additives are, from the viewpoint of effect-cost balance, 0.1 to 30 parts by weight, especially 0.2 to 20 parts by weight, more especially 0.5 to 10 parts by weight, per 100 parts by weight of a thermoplastic resin.

The thermoplastic resin composition can also be obtained by mixing a latex of a thermoplastic resin with a latex of the rubber-modified resin and subjecting the mixed latex to coprecipitation of polymer particles.

Molding methods conventionally used for thermoplastic resin compositions, e.g., injection molding, extrusion, blow molding and calendering, are applicable to the thermoplastic resin compositions of the present invention.

The obtained molded articles have excellent impact resistance as compared with those using conventional acrylic rubber-containing impact modifiers.

The present invention is more specifically explained by means of examples, but it is to be understood that the present invention is not limited to only these examples. In the following examples and comparative examples, all parts and % excepting variation coefficient are by weight unless otherwise noted.

In the following examples and comparative examples, evaluation was made in the following manners.

### [Solid concentration (heating residue) of latex and polymerization conversion]

A sample of a latex obtained after reaction was dried in a hot air dryer at 120°C for 1 hour to measure the solid concentration (heating residue). The polymerization conversion of a rubber latex was calculated according to the equation: (amount of solid matter/ amount of monomers charged) × 100 (%).

### [Average particle size]

Using as a measuring apparatus MICROTRAC UPA made by LEED & NORTHRUP INSTRUMENTS, the volume average particle size (nm) and the variation coefficient in particle size distribution (standard deviation/volume average particle size) × 100 (%) were measured by a light scattering method.

### [Content of toluene-insoluble matter (gel fraction)]

### Acrylic rubber:

An acrylic rubber latex was dried firstly at 50°C for 75 hours and then at room temperature for 8 hours under reduced pressure to give a test sample. The sample was immersed in toluene for 24 hours and centrifuged at 12,000 r.p.m. for 60 minutes, and the weight percentage of the toluene-insoluble matter in the sample was calculated. Rubber-modified resin:

A rubber-modified resin powdered in a manner described in the following Examples was treated in the same manner as above to calculate the toluene-insoluble matter content.

### [Izod impact strength]

The Izod impact strength was measured at 23°C or -30°C by using a notched ¼ inch bar or a notched ⅛ inch bar according to ASTM D-256.

### PREPARATION EXAMPLE 1

### Preparation of acrylic rubber latex (Ac-1)

A five-necked flask equipped with a stirrer, a reflux condenser, an inlet for introducing nitrogen gas, an inlet for introducing monomers and a thermometer was charged at a time with 200 parts of pure water and 1.3 parts of sodium oleate.

The temperature was then raised to 70°C with stirring in a nitrogen stream. After reaching 70°C, a mixture of 4 parts of butyl acrylate (BA) and 0.02 part of allyl methacrylate (AlMA) was added at a time to the system, and 0.05 part of potassium persulfate was further added. The resulting mixture was stirred at 70°C for 1 hour. Subsequently a mixture of 96 parts of BA and 0.48 part of AlMA was added dropwise over 5 hours, and after the completion of the addition, the mixture was further stirred for 1 hour to complete the polymerization. The polymerization conversion was 99 %. The obtained latex had a solid concentration of 33 %, an average particle size of 80 nm and a variation coefficient of 28 %. Also, the content of toluene-insoluble matter was 96 %.

### PREPARATION EXAMPLE 2

### Preparation of acrylic rubber latex (Ac-2)

A five-necked flask equipped with a stirrer, a reflux condenser, an inlet for introducing nitrogen gas, an inlet for introducing monomers and a thermometer was charged at a time with 200 parts of pure water, 1.2 parts of sodium rhodinate, 0.4 part of sodium formaldehyde sulfoxylate, 0.01 part of disodium ethylenediaminetetraacetate and 0.0025 part of ferrous sulfate.

The temperature was then raised to 40°C with stirring in a nitrogen stream. After reaching 40°C, a mixture of 70 parts of BA, 0.14 part of AlMA and 0.1 part of cumene hydroperoxide (CHP) was added dropwide over 4 hours. After the completion of the addition, the resulting mixture was further stirred for 1 hour. Subsequently a mixture of 30 parts of BA, 0.36 part of AlMA and 0.06 part of CHP was added dropwise over 2 hours, and after the completion of the addition, the mixture was further stirred for 1 hour to give acrylic rubber latex (Ac-2). The polymerization conversion was 99 %. The obtained latex had a solid concentration of 33 %, an average particle size of 85 nm and a variation coefficient of 25 %. Also, the content of toluene-insoluble matter was 96%.

### PREPARATION EXAMPLE 3

### Preparation of acrylic rubber latex (Ac-3)

A five-necked flask equipped with a stirrer, a reflux condenser, an inlet for introducing nitrogen gas, an inlet for introducing monomers and a thermometer was charged at a time with 200 parts of pure water, 1.2 parts of sodium rhodinate, 0.4 part of sodium formaldehyde sulfoxylate, 0.01 part of disodium ethylenediaminetetraacetate and 0.0025 part of ferrous sulfate.

The temperature was then raised to 40°C with stirring in a nitrogen stream. After reaching 40°C, a mixture of 12 parts of 2-ethylhexyl acrylate, 0.06 part of AlMA and 0.01 part of cumene hydroperoxide (CHP) was added at a time to the system and stirred for 1 hour. Subsequently a mixture of 88 parts of BA, 0.44 part of AlMA and 0.07 part of CHP was added dropwise over 5 hours, and after the completion of the addition, the mixture was further stirred for 1 hour to give acrylic rubber latex (Ac-3). The polymerization conversion was 99 %. The obtained latex had a solid concentration of 33 %, an average particle size of 90 nm and a variation coefficient of 25 %. Also, the content of toluene-insoluble matter was 96 %.

### PREPARATION EXAMPLE 4

### Preparation of acrylic rubber latex (Ac-4)

Acrylic rubber latex (Ac-4) was prepared in the same manner as in Preparation Example 1 except that the secondly charged mixture of 96 parts of BA and 0.48 part of AlMA was replaced with a mixture of 96 parts of BA and 0.05 part of AlMA. The polymerization conversion was 99 %. The obtained latex had a solid concentration of 33 %, an average particle size of 85 nm and a variation coefficient of 29 %. Also, the content of toluene-insoluble matter was 56 %.

### EXAMPLES 1 to 3

A five-necked flask equipped with a stirrer, a reflux condenser, an inlet for introducing nitrogen gas, an inlet for introducing monomers and a thermometer was charged at a time with 240 parts of pure water and 85 parts (solid basis) of the acrylic rubber latex shown in Table 1. The temperature was then raised to 70°C with stirring in a nitrogen stream and, after reaching 70°C, 0.03 part of potassium persulfate was added. Subsequently, a monomer mixture of 13.5 parts of methyl methacrylate (MMA) and 1.5 parts of butyl acrylate (BA) was added dropwise over 1 hour, during which 1.0 part of sodium sulfate was added to enhance the particle size by agglomeration when 3 parts of the monomer mixture had been added. After the completion of the addition, stirring was further continued for 1 hour to complete the polymerization, thus giving a latex of each of rubber-modified resins (I) to (III). The polymerization conversion was 99 %. The results of measurement of polymerization conversion and average particle size are shown in Table 1.

The obtained latex was then diluted with pure water to 15 % in solid concentration, and thereto was added 2 parts of calcium chloride to coagulate the latex. The resulting slurry was once heated to 50°C, and was then cooled, dehydrated and dried to give a powder of each of rubber-modified resins (I) to (III).

Into 100 parts of a vinyl chloride resin having a degree of polymerization of 800 were incorporated 8.5 parts of the rubber-modified resin (I), (II) or (III), 3.0 parts of octyl tin mercaptide, 1.0 part of stearyl alcohol, 0.5 part of stearic acid amide, 0.5 part of montanic acid diol ester, 0.5 part of titanium oxide and 1.0 part of a high molecular processing aid commercially available under the trade mark of KANE ACE PA20 made by Kaneka Corporation. The mixture was melt-kneaded by a 50 mm single screw extruder (model VS50-26 made by Tanabe Plastic Kikai Kabushiki Kaisha) to give pellets. The obtained pellets were molded by an injection molding machine (model IS-170G made by Toshiba Machine Co., Ltd.) at a cylinder temperature of 195°C to give 1/4 inch Izod impact test specimens. The results of the Izod impact test are shown in Table 1.

### COMPARATIVE EXAMPLE 1

A rubber-modified resin was prepared by carrying out the polymerization of a vinyl monomer in the presence of rubber particles without agglomerating the rubber particles to enhance the particle size.

That is to say, a powder of rubber-modified resin (I') was prepared in the same manner as in Example 1 except that sodium sulfate was not added.

Further, the Izod impact test was made in the same manner as in Example 1 except that the rubber-modified resin (I') was used instead of the rubber-modified resin (I). The results are shown in Table 1.

### COMPARATIVE EXAMPLE 2

A rubber-modified resin having a toluene-insoluble matter content of less than 70 % was prepared as follows:

The procedure of Example 1 was repeated except that latex (Ac-4) of acrylic rubber having a toluene-insoluble matter content of 56 % was used instead of the acrylic rubber latex (Ac-1) to give a powder of rubber-modified resin (II') having a toluene-insoluble matter content of less than 65 %.

The Izod impact test was made in the same manner as in Example 1 except that the rubber-modified resin (II') was used instead of the rubber-modified resin (I). The results are shown in Table 1.

### COMPARATIVE EXAMPLE 3

A rubber-modified resin was prepared by carrying out the polymerization of a vinyl monomer in the presence of rubber particles by using an acrylic rubber having a particle size enhanced by agglomeration instead of adding an electrolyte during the polymerization as follows:

A flask was charged with 240 parts of pure water and 85 parts (solid basis) of acrylic rubber latex (Ac-1). Thereto were added 0.7 part of acetic acid and then 0.5 part of NaOH at 70°C in a nitrogen stream to give an agglomerated rubber of enhanced particle size. The rubber of enhanced particle size had an average particle size of 175 nm.

To the obtained rubber latex was added dropwise a monomer mixture of 13.5 parts of MMA and 1.5 parts of BA over 1 hour. After the completion of the addition, the reaction mixture was further stirred for 1 hour to complete the polymerization, thus giving rubber-modified resin (II').

The Izod impact test was made in the same manner as in Example 1 except that the graft copolymer (II') was used instead of the rubber-modified resin (I). The results are shown in Table 1.

**Table 1**

| | Ex. 1 | Ex. 2 | Ex. 3 | Com. Ex.1 | Com. Ex.2 | Com.Ex.3 |
|---|---|---|---|---|---|---|
| Rubber latex | Ac-1 | Ac-2 | Ac-3 | Ac-1 | Ac-4 | Ac-1 |
| Polymerization conversion (%) | 99 | 99 | 99 | 99 | 99 | 99 |
| Average particle size (nm) | 190 | 185 | 190 | 85 | 190 | 190 |
| Toluene-insoluble matter content (%) | 95 | 96 | 94 | 95 | 65 | 95 |
| Rubber-modified resin | I | II | III | I' | II' | III' |
| Izod impact strength at 23°C (kJ/m²) | 60 | 65 | 70 | 12 | 15 | 30 |

From the results shown in Table 1, it would be understood that a high effect of improving impact resistance is exhibited by the use of the rubber-modified resin of the present invention as an impact modifier for vinyl chloride resins.

### EXAMPLE 4

Into 100 parts of a polycarbonate resin comprising 2,2-bis(4-hydroxyphenyl)propane as a bisphenol component and having a weight average molecular weight of 23,000 were incorporated 4 parts of the rubber-modified resin (I) obtained in Example 1, 0.3 part of a phenolic stabilizer (TOPANOL CA made by ZENECA) and 0.3 part of a phosphorus stabilizer (ADEKASTAB PEP36 made by Asahi Denka Kogyo K.K). The mixture was melt-kneaded by a 40 mm single screw extruder (model HW-40-28 made by Tabata Kikai Kabushiki Kaisha) to give pellets. The obtained pellets were dried at 110°C for more than 5 hours and molded by an injection molding machine (model FAS100B made by Kabushiki Kaisha FANUC) at a cylinder temperature of 290°C to give ¼ inch Izod impact test specimens. The specimens were subjected to the Izod impact test. The results are shown in Table 2.

### COMPARATIVE EXAMPLE 4

The Izod impact test was made in the same manner as in Example 4 except that the rubber-modified resin (II') obtained in Comparative Example 2 was used instead of the rubber-modified resin (I). The results are shown in Table 2.

**Table 2**

| | Example 4 | Com. Ex. 4 |
|---|---|---|
| Izod impact strength at 23°C (kJ/m²) | 50 | 20 |

From the results shown in Table 2, it would be understood that in case of using the rubber-modified resin of the present invention as an impact modifier for polycarbonate resins, it exhibits a high effect of improving impact resistance.

### EXAMPLE 5

Into a mixture of 70 parts of a polycarbonate resin comprising 2,2-bis(4-hydroxyphenyl)propane as a bisphenol component and having a weight average molecular weight of 23,000 and 30 parts of a polyethylene terephthalate having a logarithmic viscosity of 0.75 were incorporated 5 parts of the rubber-modified resin (I) obtained in Example 1, 0.3 part of a phenolic stabilizer (TOPANOL CA made by ZENECA) and 0.3 part of a phosphorus stabilizer (ADEKASTAB PEP36 made by Asahi Denka Kogyo K.K). The mixture was melt-kneaded by a twin screw extruder (model TEX44S made by The Japan Steel Works, Ltd.) to give pellets. The obtained pellets were dried at 110°C for more than 5 hours and molded by an injection molding machine (model FAS100B made by Kabushiki Kaisha FANUC) at a cylinder temperature of 280°C to give 1/8 inch Izod impact test specimens. The specimens were subjected to the Izod impact test. The results are shown in Table 3.

### COMPARATIVE EXAMPLE 5

The Izod impact test was made in the same manner as in Example 5 except that the rubber-modified resin (I) was not used. The results are shown in Table 3.

**Table 3**

| | Example 5 | Com. Ex. 5 |
|---|---|---|
| Izod impact strength at 23°C (kJ/m²) | 65 | 30 |

From the results shown in Table 3, it would be understood that the rubber-modified resin of the present invention is useful for improvement in the impact resistance of polycarbonate/polyethylene terephthalate blended resin.

### EXAMPLE 6

Into a mixture of 70 parts of a polycarbonate resin (LEXANE 121 made by GE Plastics Japan Ltd.) and 30 parts of an ABS resin (SUNTAC AT05 made by Mitsui Chemicals, Inc.) were incorporated 5 parts of the rubber-modified resin (I) obtained in Example 1, 0.3 part of a phenolic stabilizer (TOPANOL CA made by ZENECA) and 0.3 part of a phosphorus stabilizer (ADEKASTAB PEP36 made by Asahi Denka Kogyo K.K). The mixture was melt-kneaded by a 40 mm single screw extruder (model HW-40-28 made by Tabata Kikai Kabushiki Kaisha) to give pellets. The obtained pellets were dried at 110°C for more than 5 hours and molded by an injection molding machine (model FAS100B made by Kabushiki Kaisha FANUC) at a cylinder temperature of 260°C to give 1 /4 inch Izod impact test specimens. The specimens were subjected to the Izod impact test at -30°C. The results are shown in Table 4.

### COMPARATIVE EXAMPLE 6

The procedure of Example 6 was repeated except that the rubber-modified resin (I) was not used. The results of Izod impact test are shown in Table 4.

**Table 4**

| | Example 6 | Com. Ex. 6 |
|---|---|---|
| Izod impact strength at -30°C (kJ/m²) | 12 | 8 |

From the results shown in Table 4, it is found that the rubber-modified resin of the present invention is useful for improving the impact resistance of a polycarbonate/ABS resin blend.

### INDUSTRIAL APPLICABILITY

Rubber-modified resins of the present invention which are obtained by polymerizing vinyl monomers in the presence of acrylic rubber particles, during which polymer particles are agglomerated to enhance the particle size and which have a toluene-insoluble matter content of at least 70 % are useful as impact modifier for various thermoplastic resins. Thermoplastic resin compositions comprising the rubber-modified resin and a thermoplastic resin exhibit excellent impact resistance.

## Claims

1. An impact modifier for thermoplastic resins comprising a rubber-modified resin which is obtained by polymerizing a vinyl monomer in the presence of acrylic rubber particles and, during the polymerization, agglomerating polymer particles to enhance the particle size and which has a toluene-insoluble matter content of at least 70 % by weight.

2. The impact modifier of Claim 1, wherein 5 to 30 parts by weight of said vinyl monomer is polymerized in the presence of 70 to 95 parts by weight of said acrylic rubber particles, the total thereof being 100 parts by weight.

3. The impact modifier of Claim 1 or 2, wherein said acrylic rubber particles are in the form of a latex.

4. The impact modifier of any one of Claims 1 to 3, wherein said vinyl monomer is at least one member selected from the group consisting of aromatic vinyl monomers, vinyl cyanide monomers, halogenated vinyl monomers, (meth)acrylic acid and (meth)acrylic esters.

5. A thermoplastic resin composition comprising 100 parts by weight of a thermoplastic resin and 0.1 to 150 parts by weight of the impact modifier of Claim 1.

6. The composition of Claim 5, wherein said thermoplastic resin is at least one member selected from the group consisting of polyvinyl chloride, chlorinated polyvinyl chloride, polystyrene, styrene-acrylonitrile copolymer, styrene-acrylonitrile-N-phenylmaleimide copolymer, α-methylstyrene-acrylonitrile copolymer, polymethyl methacrylate, methyl methacrylate-styrene copolymer, polycarbonate, polyamide, polyester, HIPS resin, ABS resin, AAS resin, AES resin and polyphenylene ether.
